(19) **Europäisches Patentamt**

**European Patent Office**

**Office européen des brevets**

(11) **EP 1 592 597 B1**

(12) **FASCICULE DE BREVET EUROPEEN**

(45) Date de publication et mention
de la délivrance du brevet:
**06.12.2006 Bulletin 2006/49**

(51) Int Cl.:
***B62D 5/04*** *(2006.01)*     ***B62D 6/00*** *(2006.01)*

(21) Numéro de dépôt: **04703821.1**

(22) Date de dépôt: **21.01.2004**

(86) Numéro de dépôt international:
**PCT/FR2004/050023**

(87) Numéro de publication internationale:
**WO 2004/071844 (26.08.2004 Gazette 2004/35)**

(54) **PROCEDE DE GESTION DE LA DIRECTION D UN VEHICULE**

VERFAHREN ZUR FAHRZEUGLENKSTEUERUNG

VEHICLE STEERING CONTROL METHOD

(84) Etats contractants désignés:
**AT BE BG CH CY CZ DE DK EE ES FI FR GB GR
HU IE IT LI LU MC NL PT RO SE SI SK TR**

(30) Priorité: **11.02.2003 FR 0301590**

(43) Date de publication de la demande:
**09.11.2005 Bulletin 2005/45**

(73) Titulaire: **RENAULT TRUCKS
69800 St Priest (FR)**

(72) Inventeur: **DECHAMP, François
F-71250 Cluny (FR)**

(74) Mandataire: **Vuillermoz, Bruno
Cabinet Laurent & Charras
B.P. 32
20, rue Louis Chirpaz
69134 Ecully Cedex (FR)**

(56) Documents cités:
**US-A- 5 251 135**

**Description**

**Domaine technique**

L'invention se rattache au domaine des systèmes de commande de direction équipant les véhicules automobiles, et notamment mais non exclusivement, les véhicules industriels tels que les camions.

Elle concerne plus spécifiquement les systèmes de direction dans lesquels le braquage des roues n'est pas obtenu par une transmission mécanique, mais par le biais d'un ou plusieurs dispositifs mettant en oeuvre des circuits hydrauliques, électro-hydrauliques ou électriques. Ce type de direction est connue sous l'appellation "steer by wire". Le document US-A-5 251 135 divulgue un procédé de direction d'après le préambule de la revendication 1.

L'invention vise plus spécifiquement un procédé de commande de direction au moyen de ce type de système, visant à tenir compte de certains paramètres liés aux trajectoires suivies, ainsi qu'au mode de conduite du chauffeur.

**Techniques antérieures**

De façon générale, les systèmes de direction "steer by wire" agissent sur l'angle de braquage des roues au moyen d'un ou plusieurs actionneurs, commandés en fonction de la position angulaire du volant, voire d'un manipulateur se présentant sous la forme d'un manche ou d'un levier, ou de façon plus générale d'un organe de commande de l'angle de direction.

Il est déjà connu, notamment par les documents US 6 176 341, US 6 041 882 ou US 6 096 286, d'équiper un système de direction d'un moteur relié à l'organe de direction, de manière à générer un couple résistant, destiné à contrarier l'effort exercé par le chauffeur. Ce couple résistant est nécessaire pour simuler la résistance du contact roue/chaussée qui est ressenti sur un système de direction mécanique classique. Ce couple résistant permet également de compenser la relative facilité de déplacement de l'organe de direction.

En effet, et en particulier sur les systèmes incluant un manipulateur se présentant sous la forme d'un manche, la commande est particulièrement directe, et l'amplitude des mouvements du chauffeur est réduite. Cette faible amplitude impose au conducteur d'adapter sa vitesse de manipulation afin de ne pas modifier trop fortement la dynamique du véhicule.

En pratique, le couple résistant peut être généré par un système amortisseur, tel qu'un amortisseur hydraulique, ou un moteur électrique, de telle sorte que le couple résistant est proportionnel, ou plus généralement fonction de la vitesse de déplacement de l'organe de direction.

Le problème que se propose de résoudre l'invention est celui d'adapter la valeur de cet amortissement en fonction des conditions de roulage qui peuvent dépendre non seulement de la trajectoire à parcourir, mais également du mode de conduite du chauffeur.

**Exposé de l'invention**

L'invention concerne donc un procédé de gestion de la direction d'un véhicule dans lequel le chauffeur commande le braquage des roues par le déplacement d'un organe de commande de direction.

De façon connue, un couple résistant est appliqué sur cet organe de commande de direction. Ce couple résistant est fonction de la vitesse de déplacement de l'organe de direction pondéré par un coefficient d'amortissement. Ce couple peut se rajouter à un couple dit de "retour d'effort" appliqué pour retranscrire au chauffeur la résistance du contact roue/chaussée.

Conformément à l'invention, le coefficient d'amortissement de ce couple résistant visqueux est ajusté dynamiquement, et il comporte au moins deux composantes combinées, prenant en compte les variations du braquage des roues sur deux périodes glissantes de durées différentes.

Autrement dit, le taux d'amortissement est déterminé pour tenir compte de deux phénomènes de nature différente, et piloter la sensibilité de l'organe de commande de direction de façon optimisée.

Ainsi, une première composante du coefficient d'amortissement peut tenir compte des variations du braquage des roues sur une période donnée, et dans une plage de fréquence donnée correspondant à des variations représentatives de la technicité de la route, c'est-à-dire des courbures de la trajectoire.

L'autre composante du coefficient d'amortissement peut prendre en compte les variations du braquage sur une période différente par exemple plus longue, pour ne pas être sensible aux variations de courbure de la trajectoire, mais uniquement au mode de conduite du chauffeur, et sa propension à générer sur le volant des mouvements saccadés et rapprochés, et parfois inutiles.

Bien entendu, il est également possible de combiner plus de deux composantes, par exemple en tenant compte des variations du braquage sur trois périodes différentes ou plus, sans sortir du cadre de l'invention.

En pratique, il est possible de tenir compte des variations du braquage des roues en utilisant une information issue d'un capteur de braquage, ou bien encore de prendre en compte la consigne appliquée à l'actionneur responsable du braquage. Il est également possible de tenir compte des variations de déplacement de l'organe de direction, qui sont représentatives de celles du braquage des roues.

La prise en compte de ces variations peut se faire de différentes façons.

Ainsi, l'une ou l'autre des composantes du coefficient d'amortissement peuvent par exemple être obtenues par l'intégration d'une fonction de l'accélération du braquage des roues, sur une période glissante.

Cette fonction de l'accélération peut notamment inclure un filtrage de cette accélération sur une plage de fréquences donnée. Cette plage de fréquences peut être la même pour les deux composantes, ou bien encore être individualisée pour chacune de ces composantes.

En pratique, il est également possible de tenir compte de la vitesse du véhicule dans la détermination de chacune des composantes du coefficient d'amortissement. De la sorte, le couple résistant appliqué à l'organe de direction peut varier selon que l'on se trouve dans des situations de manoeuvre à basse vitesse notamment. A l'inverse, à haute vitesse, la sensibilité de l'organe de direction est atténuée, pour éviter les écarts de trajectoire avec de faibles mouvements de l'organe de commande de direction.

### Description sommaire des figures

La manière de réaliser l'invention ainsi que les avantages qui en découlent ressortiront bien de la description du mode de réalisation qui suit, à l'appui de l'unique figure annexée qui représente un synoptique d'un système de direction fonctionnant conformément à l'invention.

### Manière de réaliser l'invention

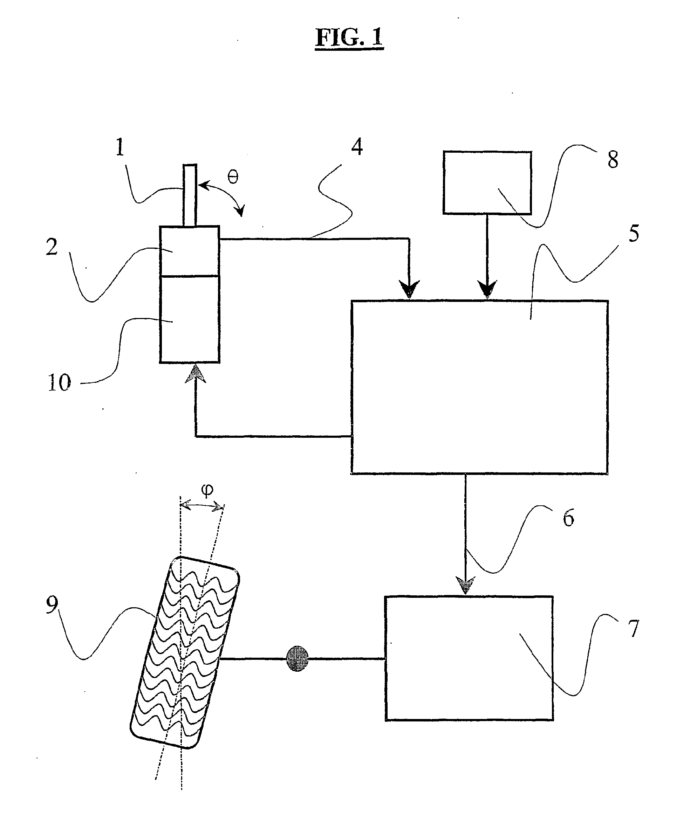

Comme illustré à la figure 1, un système de direction du type "steer by wire" comporte un organe de commande de direction, qui dans la forme illustrée est un manipulateur du type mini-manche (1). Ce manipulateur (1) est associé à un capteur (2) permettant d'élaborer un signal représentatif de son inclinaison (θ), correspondant à la consigne de braquage. Ce signal (4) est acheminé à un calculateur (5) qui détermine un ordre de commande (6) à appliquer à un actionneur (7), qui agit directement sur l'angle de braquage mécanique d'une ou des deux roues (9). Le calculateur (5) reçoit également une information sur la vitesse du véhicule qui est obtenue au moyen d'un capteur (8) de vitesse.

Conformément à l'invention, l'organe de commande de direction (1) est associé à un générateur d'effort (10) permettant de générer un couple résistant s'opposant à la variation de l'inclinaison (θ) du manipulateur (1). Ce générateur d'effort (10) présente un taux d'amortissement qui est variable, et qui peut être réglé par le calculateur (5).

Cet générateur d'effort peut être réalisé de différentes manières, et notamment par un moteur électrique, et par exemple un moteur à courant continu branché sur une résistance dont la valeur peut être ajustée par le calculateur. On peut également utiliser un générateur d'effort de type hydraulique, dont l'amortissement est réglé par une valve pilotable, ou bien dont la viscosité du fluide peut également être réglée.

Conformément à l'invention, ce taux d'amortissement élaboré par le calculateur tient compte de deux façons différentes, des variations de l'angle de braquage (φ), qui peut être déduit de la consigne (6) élaborée par le calculateur (5), ou bien encore être calculé à partir du déplacement de l'organe de commande de direction, et dans l'exemple illustré de l'angle d'inclinaison (θ) du manipulateur.

Dans un exemple de réalisation, le taux d'amortissement global $T_G$ combine deux taux différents $T_H$ et $T_B$, qui sont déterminés de manière distincte.

Dans un exemple de réalisation, $T_G=T_H \cdot T_B$, avec

$$T_H = A + B \cdot \int_{t-t_1}^{t} F_1\left(V, \frac{d\ddot{\varphi}}{dt}\right) \cdot dt \text{, et } T_B = C + D \cdot \int_{t-t_2}^{t} F_2\left(V, \frac{d\ddot{\varphi}}{dt}\right) \cdot dt \text{,}$$

dans lesquels:

- A, B, C et D sont des coefficients constants, déterminés en fonction de des caractéristiques du véhicule, et de la variation souhaitée pour chacune des composantes. Plus précisément, A et C représentent les minimums respectivement des composantes $T_H$ et $T_G$. Les coefficients B et D sont déterminés expérimentalement et dimensionnent la part variable de chacune des deux composantes,

   ■ $F_1$ et $F_2$ sont des fonctions de filtrage dont la ou les fréquences de coupure peuvent être ajustées,
   ■ $\ddot{\varphi}$ est l'accélération angulaire de la position du manipulateur,

■ V est la vitesse du véhicule,

■ $t_1$ et $t_2$ sont des durées correspondants aux périodes glissantes d'intégration.

Dans certains cas, ces coefficients et les fonctions de filtrage peuvent prendre en compte des paramètres relatifs à la trajectoire théorique du véhicule, déterminés à partir de données cartographiques, enregistrées dans le véhicules, ou accessibles à distance.

Il ressort de ce qui précède que le procédé de gestion de la direction conforme à l'invention présente de multiples avantages, et notamment celui d'adapter le couple résistant appliqué sur l'organe de direction de manière à obtenir la sensibilité optimale de ce dernier, en fonction du type de trajectoire et du mode de conduite du chauffeur.

**Revendications**

1.    Procédé de gestion de la direction d'un véhicule dans lequel le chauffeur commande le braquage des roues (9) par le déplacement d'un organe de commande de direction (1), et dans lequel un couple résistant est appliqué sur ledit organe de commande de direction (1), ledit couple résistant étant fonction de la vitesse de déplacement de l'organe de direction pondérée par un coefficient d'amortissement, **caractérisé en ce que** ledit coefficient d'amortissement est ajusté dynamiquement et comporte au moins deux composantes combinées prenant en compte les variations du braquage des roues sur deux périodes glissantes de durée différente.

2.    Procédé selon la revendication 1, **caractérisé en ce qu'**une ou les deux composantes sont obtenues par l'intégration d'une fonction de l'accélération du braquage des roues sur une période glissante.

3.    Procédé selon la revendication 2, **caractérisé en ce que** ladite fonction de l'accélération du déplacement inclut un filtrage de ladite accélération.

4.    Procédé selon la revendication 1, **caractérisé en ce qu'**une ou les deux composantes sont également fonction de la vitesse du véhicule.

**Claims**

1.    Vehicle steering control method in which the driver controls the steering lock of the wheels (9) by moving a steering control device (1) and in which a resisting torque is applied to said steering control device (1), said resisting torque being a function of the rate at which the steering device is moved, weighted by a damping coefficient, **characterised in that** said damping coefficient is dynamically adjusted and comprises at least two combined components, taking into account variations in the steering lock of the wheels over two rolling periods of different duration.

2.    Method as claimed in claim 1, **characterised in that** one or both components are obtained by integrating a wheel steering lock acceleration function over a rolling period.

3.    Method as claimed in claim 2, **characterised in that** said movement acceleration function includes filtering of said acceleration.

4.    Method as claimed in claim 1, **characterised in that** one or both components are also a function of the vehicle's speed.

**Patentansprüche**

1.    Lenksteuerungsverfahren für ein Fahrzeug, in dem der Lenker den Einschlag der Räder (9) durch die Bewegung eines Lenksteuerungsorgans (1) steuert und in dem ein Widerstandsmoment an das Lenksteuerungsorgan (1) angelegt wird, wobei das Widerstandsmoment eine Funktion der Geschwindigkeit der Bewegung des Lenkorgans ist, die durch einen Dämpfungskoeffizienten gewichtet ist, **dadurch gekennzeichnet, dass** der Dämpfungskoeffizient dynamisch angepasst wird und mindestens zwei kombinierte Komponenten umfasst, die die Schwankungen des Einschlags der Räder über zwei gleitende Zeiträume von unterschiedlicher Dauer berücksichtigen.

2.    Verfahren nach Anspruch 1, **dadurch gekennzeichnet, dass** eine oder beide Komponenten durch die Integration einer Funktion der Beschleunigung des Einschlags der Räder über einen gleitenden Zeitraum erzielt werden.

3. Verfahren nach Anspruch 2, **dadurch gekennzeichnet, dass** die Funktion der Beschleunigung der Bewegung eine Filterung der Beschleunigung einschließt.

4. Verfahren nach Anspruch 1, **dadurch gekennzeichnet, dass** eine oder beide Komponenten auch eine Funktion der Geschwindigkeit des Fahrzeugs sind.

# FIG. 1